# EUROPÄISCHE PATENTSCHRIFT

(11) **EP 0 589 403 B1**
(45) Veröffentlichungstag und Bekanntmachung des Hinweises auf die Patenterteilung: **16.04.1997**
(21) Anmeldenummer: 93115138.5
(22) Anmeldetag: 21.09.1993
(51) Int. Cl.: A01B 39/16, A01B 61/04

(54) **Landwirtschaftliche Maschine**
Agricultural machine
Machine agricole

(30) Priorität: 24.09.1992 DE 9212854 U
(43) Veröffentlichungstag der Anmeldung: 30.03.1994
(73) Patentinhaber: Maschinenfabrik Bermatingen GmbH & Co., D-88697 Bermatingen (DE)
(72) Erfinder: Fleck, Alfons, D-88697 Bermatingen (DE)
(74) Vertreter: Engelhardt, Guido, Dipl.-Ing.

(56) Entgegenhaltungen:
- EP-A- 0 141 974
- EP-A- 0 487 968
- FR-A- 2 219 742
- FR-A- 2 563 970
- US-A- 4 332 299

## Beschreibung

Die Erfindung bezieht sich auf eine landwirtschaftliche Maschine mit einem oder mehreren antreibbaren Bodenbearbeitungswerkzeugen, die mittels eines verschiebbaren Tragrahmens an der Vorder- oder Rückseite eines Fahrzeuges anbringbar und etwa senkrecht zur Fahrtrichtung durch eine durch einen Fühler betätigbare Steuereinrichtung verstellbar angeordnet sind.

Bei der Maschine der US-A-4332299 wird die Steuereinrichtung von Hand betätigt.

Bei einer aus der Praxis bekannten Bodenfräsmaschine der oben gennanten Art, die mit vertikal angeordneten um eine Achse antreibbaren Zinken als Bodenbearbeitungswerkzeuge bestückt ist, kann der Zinkenträger mit Hilfe einer durch einen Fühler betätigbaren hydraulischen Steuereinrichtung zwar achssenkrecht zu dem Fahrzeug eingefahren werden, eine zufriedenstellende Arbeitsweise ist beim Einsatz dieser Bodenbearbeitungsmaschine jedoch nicht gegeben. Der Zinkenträger ist nämlich bei dieser Ausgestaltung nur in Richtung des Fahrzeuges verschiebbar in einem Gehäuse gelagert, bei einem Ausfall oder einer verzögerten Betätigung der Servoeinrichtung kann demnach der Zinkenträger und/oder dessen Gehäuse nicht rechtzeitig einem Hindernis ausweichen, die Bodenbearbeitungswerkzeuge, das Maschinengehäuse oder das Hindernis, meist ein Baumstamm, werden bei einem derartigen Auffahren oftmals in einem erheblichen Maße beschädigt, so daß mitunter die Maschine nicht mehr einsatzfähig ist und instandgesetzt werden muß. Auch kann der mit einem gewissen Abstand über dem Boden angeordnete Fühler auf einen Stein als Hindernis nicht ansprechen. Des weiteren ist von Nachteil, daß die Zinken, da dem Fühler ein Verstellbereich zuzuordnen ist, nicht nahe genug an ein Hindernis herangeführt werden können. Der Boden wird demnach um ein Hindernis herum nicht bearbeitet, Nacharbeiten von Hand sind somit nahezu unumgänglich. Ein gutes Arbeitsergebnis ist mit der bekannten Bodenbearbeitungsmaschine daher nicht zu erzielen, auch ist ein störungsfreier Betrieb oftmals nicht gewährleistet.

Aufgabe der Erfindung ist es demnach, die landwirtschaftliche Maschine der vorgenannten Gattung derart zu verbessern, daß sichergestellt ist, daß auch bei Ausfall oder einer verzögerten Betätigung der zur Verstellung des BodenbearbeitungswerkzeugeS vorgesehenen Servoeinrichtung weder dessen Werkzeuge durch das Hindernis noch dieses durch das Bodenbearbeitungswerkzeug beschädigt werden. Vielmehr soll es ermöglicht werden, daß das Bodenbearbeitungswerkzeug selbsttätig, und zwar insbesondere auch bei Hindernissen geringer Höhe zusätzlich verstellt wird, so daß ein hartes Anfahren ausgeschlossen und dadurch bedingte Beschädigungen ausgeschlossen werden. Des weiteren soll es möglich sein, den Boden auch im unmittelbaren Bereich eines Hindernisses zu bearbeiten, die Bodenbearbeitungswerkzeuge sollen somit nahe an einen Baumstamm herangeführt werden, Nacharbeiten sollen demnach beim Einsatz der vorschlagsgemäß ausgebildeten Maschine nicht erforderlich sein. Der Bauaufwand, mit dem dies zu bewerkstelligen ist, soll gering gehalten werden, dennoch soll eine stets zufriedenstellende und störunanfällige Betriebsweise gegeben sein.

Gemäß der Erfindung wird dies bei einer Maschine der eingangs genannten Art dadurch erreicht, daß das Bodenbearbeitungswerkzeug an dem Tragrahmen mittels eines Schwenkarmes gehalten ist, der in seinem mittleren Bereich verschwenkbar an dem Tragrahmen angebracht ist, in einem Endbereich, vorzugsweise dem dem Fahrzeug zugekehrten Endbereich, das Bodenbearbeitungswerkzeug trägt und in dessen anderem Endbereich eine oder mehrere an dem Tragrahmen abgestützte Federn angelenkt sind.

Sehr vorteilhaft ist es hierbei, das Bodenbearbeitungswerkzeug beispielsweise mittels eines Gehäuses oder dgl. auf der dem Tragrahmen zugekehrten Seite zwischen seiner Rotationsachse und dem äußeren Rand, vorzugsweise im äußeren Randbereich, oder in dem in Fahrtrichtung vorderen Bereich des Gehäuses an dem Schwenkarm zu befestigen, so daß dessen Verstellbereich groß bzw. das Bodenbearbeitungswerkzeug pendelnd an dem Schwenkarm angehängt ist.

Zweckmäßig ist es ferner, den Tragrahmen um eine in Richtung der Längsachse des Fahrzeuges verlaufende Achse verschwenkbar, vorzugsweise mit Hilfe eines Hubzylinders, zu halten und wenn dieser aus einem T-förmig ausgebildeten Holm und einem an dessen parallel zur Längsachse des Fahrzeuges verlaufenden Steg angebrachten Tragarm besteht. Der Tragarm sollte verschiebbar in einem mit dem Fahrzeug gelenkig verbundenen Profilkörper geführt sein, wobei an dem äußeren Schenkel des T-förmigen Holms der Schwenkarm gelenkig gelagert und an dem inneren Schenkel die auf diesen einwirkende Zugfeder, vorzugsweise verstellbar, abgestützt sein kann.

Angebracht ist es auch, an dem Profilkörper eine Führungsschiene zur Aufnahme einer auf den Steg des T-förmigen Holmes einwirkenden Servoeinrichtung anzuordnen, die zweckmäßigerweise in unterschiedlichen Abständen zu dem Um eine große Ausladung zu ermöglichen, sollte der Tragarm aus zwei oder mehreren teleskopartigen begrenzt ineinander geführten Bauteilen bestehen.

Auch kann der Tragrahmen mit einem vorzugsweise seitlich verstellbar an den Schenkeln des T-förmigen Holms, z.B. mittels einer Schiene, angebrachten Stützrades versehen sein.

Wird eine landwirtschaftliche Maschine gemäß der Erfindung ausgebildet, in dem das Bodenbearbeitungswerkzeug nicht nur mit Hilfe des Tragrahmens in Richtung des Fahrzeuges gesteuert verstellbar angeordnet, sondern zusätzlich mittels eines verschwenkbar gelagerten Schwenkarmes an dem Tragrahmen abgestützt wird, so kann das Bodenbearbeitungswerkzeug selbsttätig, ohne auf die auf den Tragrahmen einwirkende Servoeinrichtung angewiesen zu sein, einem Hindernis, und zwar auch einem Hindernis mit geringer Höhe, beispielsweise einem Stein, ausweichen. Auch bei Ausfall der Steuermittel und der Servoeinrichtung oder bei einer verzögerten Betätigung schlägt das Bodenbearbeitungswerkzeug nicht hart auf ein Hindernis auf, sondern durch dieses wird vielmehr der Schwenkarm entgegen der Kraft einer Feder verstellt, bzw. das pendelnd an dem Schwenkarm angehängte Bodenbearbeitungswerkzeug kann seitlich nach innen und gegebenenfalls auch nach außen ausweichen. Beschädigungen an den Werkzeugen und/oder dem Hindernis werden auf diese Weise weitgehend vermieden, das Bodenbearbeitungswerkzeug wird vielmehr durch das Hindernis nach außen gedrückt und weicht somit diesem aus.

Des weiteren ist von Vorteil, daß aufgrund der verschwenkbaren Anordnung des Bodenbearbeitungswerkzeuges dieses sehr nahe an ein Hindernis herangeführt werden kann. Der Boden kann demnach auch in unmittelbarer Nähe eines Baumstammes bearbeitet werden, ohne daß die Gefahr besteht, daß dieser beschädigt wird. Das Bodenbearbeitungswerkzeug wird durch Anlage des Gehäuses oder eines dafür vorgesehenen Bügels durch den Baumstamm eingeschwenkt und durch die Kraft der an dem Schwenkarm abgestützten Feder um diesen herumgeführt, eine saubere Bearbeitung des Bodens, insbesondere in Kulturen mit dicht nebeneinander angeordneten Baumstämmen, ist somit gewährleistet. Die vorschlagsgemäß ausgebildete Maschine ist demnach vielseitig einsetzbar und ermöglicht bei geringer Störanfälligkeit eine stets zufriedenstellende Arbeitsweise.

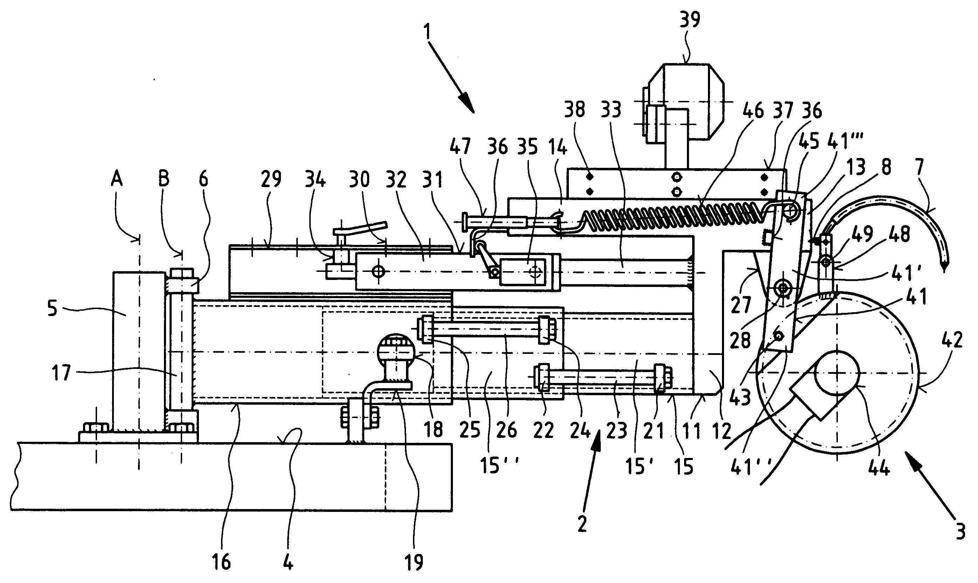

In der Zeichnung ist ein Ausführungsbeispiel der gemäß der Erfindung ausgestalteten landwirtschaftlichen Maschine dargestellt, das nachfolgend im einzelnen erläutert ist.

Die in einer Draufsicht gezeigte und mit 1 bezeichnete landwirtschaftliche Maschine ist an einem Fahrzeug 4, beispielsweise an einer Frontplatte, angebracht und besteht im wesentlichen aus einem Tragrahmen 2 und einem Bodenbearbeitungswerkzeug 3, das in unterschiedlicher Weise je nach Verwendungszweck ausgebildet sein kann. Mit Hilfe eines im Arbeitsbereich des Bodenbearbeitungswerkzeuges 3 angeordneten Fühlers 7 ist dieses gesteuert achssenkrecht zu der Längsachse A des Fahrzeuges 4 verstellbar. Dazu dient eine Servoeinrichtung 31, die auf den Tragrahmen 2 einwirkt.

Der Tragrahmen 2 ist bei dem gezeigten Ausführungsbeispiel aus einem T-förmigen Holm 11 sowie einem an dessen parallel zur Längsachse A des Fahrzeuges 4 verlaufenden Steg 12 befestigten Tragarm 15 zusammengesetzt, der verschiebbar in einem Profilkörper 16 gehalten ist. Mittels einer Welle 17 ist der Profilkörper 16 verschwenkbar um eine Achse B in zwei Lagern 6 gehalten, die an einem an dem Fahrzeug 4 vorgesehenen Träger 5 befestigt sind. Zum Verschwenken des Profilkörpers 16 ist ein Hubzylinder 18 vorgesehen, der mittels einer Halterung 19 ebenfalls an dem Fahrzeug 4 abgestützt ist. Das Bodenbearbeitungswerkzeug 3 kann demnach auch zur Bearbeitung von Hanglagen verwendet werden.

Der Tragrahmen 15 ist durch zwei Bauteile 15' und 15'' gebildet, die begrenzt ineinander bzw. in dem Profilkörper 16 verschiebbar sind. Die Begrenzung wird durch Führungsstangen 23 bzw. 26 bewerkstelligt, die in auf den Bauteilen 15, 15' sowie dem Profilkörper 16 aufgeschweißte Lager 21 und 22 bzw. 24 und 25 gehalten sind. Zur Aufnahme der Servoeinrichtung 31 ist an dem Profilkörper 16 des weiteren eine Schiene 29 angebracht.

Die Servoeinrichtung 31 besteht hierbei aus einem Zylinder 32 und einem in diesen verschiebbar eingesetzten und beidseitig von Druckmittel beaufschlagbaren Kolben 33, der mit seinem freien Ende an dem Steg 12 des T-förmigen Halters 11 befestigt ist. Mittels einer Arretiereinrichtung 34 kann die Servoeinrichtung 31 in unterschiedlichen Abständen zu dem Steg 12 angeordnet werden. Dazu sind in der Schiene 29 mehrere Bohrungen 30 vorgesehen, in denen die Arretiereinrichtung 34 einzusetzen ist. Außerdem ist die Servoeinrichtung 31 mit einem Endschalter 35 ausgestattet.

Damit das Bodenbearbeitungswerkzeug 3 nicht nur achssenkrecht zur Längsachse A des Fahrzeuges 4, sobald der Fühler 7 durch ein Hindernis eingeschwenkt wird, eingefahren werden kann, sondern unabhängig davon auch noch selbsttätig eingeschwenkt wird, ist dieses an einem Schwenkarm 41 angebracht. In seinem mittleren Bereich 41' ist der Schwenkarm 41 mittels eines Gelenks 28 in einem an dem äußeren Schenkel 13 des T-förmigen Holms 11 befestigten Lager 27 gelagert, in dem dem Fahrzeug 4 zugekehrten Endbereich 41'' ist das Bodenbearbeitungswerkzeug 3 angeordnet.In dem gegenüberliegenden Endbereich 41''' ist an dem Schwenkarm 41 eine in einem Bolzen 45 gehaltene Zugfeder 46 abgestützt, die an dem inneren Schenkel 14 des T-förmigen Holms 11 mittels eines Verstellgliedes 47 gehalten ist. Der Schwenkarm 41, der in der gezeigten Betriebsstellung an einem an dem Tragrahmen 2 vorgesehenen Anschlag 36 anliegt, kann somit entgegen der Kraft der Zugfeder 46 durch ein Hindernis eingeschwenkt werden.

Um einen möglichst großen Verstellbereich des durch einen Hydraulikmotor 44 antreibbaren Bodenbearbeitungswerkzeuges 3 zu ermöglichen, ist dessen Gehäuse 42 in dem äußeren Bereich zwischen der Rotationsachse und dem Rand mittels eines Schraubenbolzens 43 an dem Schwenkarm 41 befestigt. Des weiteren ist an den Schenkeln 13 und 14 des T-förmigen Holms 11 eine Schiene 37 angebracht, an der ein zur Abstützung des Tragarmes 2 vorgesehenes Stützrad 39 befestigt ist. Die Schiene 37 ist dazu mit in Abstand zueinander angeordneten Bohrungen 38 versehen, so daß das Stützrad 39 je nach Ausladung versetzt werden kann.

Wird der Fühler 7, der mittels eines in ein an dem Gehäuse 42 des Bodenbearbeitungswerkzeuges 3 befestigten Lagers 48 eingesetzten Bolzens 49 verstellbar gelagert ist, bei einem Arbeitsvorgang durch ein Hindernis, beispielsweise einen Baumstamm, verschwenkt, so wird über einen an dem Fühler 7 angelenkten Bowdenzug 8 ein nicht gezeigtes Steuergerät betätigt und über die Servoeinrichtung 31 wird der Tragrahmen 2 nach innen verschoben. Ist aber das zu umfahrende Hindernis nicht hoch genug, um den Fühler 7 zu betätigen, in dem z. B. im Arbeitsbereich des Bodenbearbeitungswerkzeuges ein Stein liegt, oder wird die Servoeinrichtung 31 verzögert mit Druckmittel versorgt, kann das Bodenbearbeitungswerkzeug 3 mittels des Schwenkarmes 41 unabhängig von dem Tragrahmen 2 eingeschwenkt werden. Bei Anlage des Gehäuses 42 an einem Hindernis wird nämlich der Schwenkarm 41 entgegen der Kraft der Zugfeder 46 mehr oder weniger nach innen eingeschwenkt, das Bodenbearbeitungswerkzeug 3 weicht demnach einem Hindernis selbsttätig aus und wird um dieses, ohne daß Beschädigungen in Kauf zu nehmen sind, herumgeführt.

## Patentansprüche

1. Landwirtschaftliche Maschine (1) mit einem oder mehreren antreibbaren Bodenbearbeitungswerkzeugen (3), die mittels eines verschiebbaren Tragrahmens (2) an der Vorder- oder Rückseite eines Fahrzeuges (4) anbringbar und etwa senkrecht zur Fahrtrichtung durch eine durch einen Fühler betätigbare Steuereinrichtung verstellbar angeordnet sind,
**dadurch gekennzeichnet,**
daß das Bodenbearbeitungswerkzeug (3) an dem Tragrahmen (2) mittels eines Schwenkarmes (41) gehalten ist, der in seinem mittleren Bereich (41') verschwenkbar an dem Tragrahmen (2) angebracht ist, in einem Endbereich (41''), vorzugsweise dem dem Fahrzeug (4) zugekehrten Endbereich (41''), das Bodenbearbeitungswerkzeug (3) trägt und in dessen anderem Endbereich (41''') eine oder mehrere an dem Tragrahmen (2) abgestützte Federn (46) angelenkt sind.

2. Landwirtschaftliche Maschine nach Anspruch 1,
**dadurch gekennzeichnet,**
daß das Bodenbearbeitungswerkzeug (3) beispielsweise mittels eines Gehäuses (42) oder dgl. auf der dem Tragrahmen (2) zugekehrten Seite zwischen seiner Rotationsachse und dem äußeren Rand, vorzugsweise im äußeren Randbereich, oder in dem in Fahrtrichtung vorderen Bereich des Gehäuses (42) an dem Schwenkarm (41) befestigt ist.

3. Landwirtschaftliche Maschine nach Anspruch 1 oder 2,
**dadurch gekennzeichnet,**
daß der Tragrahmen (2) um eine in Richtung der Längsachse (A) des Fahrzeuges (4) verlaufende Achse (B) verschwenkbar, vorzugsweise mit Hilfe eines Hubzylinders (18), gehalten ist.

4. Landwirtschaftliche Maschine nach einem oder mehreren der Ansprüche 1 bis 3,
**dadurch gekennzeichnet,**
daß der Tragrahmen (2) aus einem T-förmig ausgebildeten Holm (11) und einem an dessen parallel zur Längsachse (A) des Fahrzeuges (4) verlaufenden Steg (12) angebrachten Tragarm (15) besteht, der verschiebbar in einem mit dem Fahrzeug (4) gelenkig verbundenen Profilkörper (16) geführt ist.

5. Landwirtschaftliche Maschine nach Anspruch 4,
**dadurch gekennzeichnet,**
daß der Tragrahmen (2) mit einem vorzugsweise seitlich verstellbar an den Schenkeln (13, 14) des T-förmigen Holms (11), z. B. mittels einer Schiene (37), angebrachten Stützrades (39) versehen ist.

## Claims

1. Agricultural machine (1) with one or more driven tillage tools (3) which can be attached to the front or back of a vehicle (4) by means of a movable carrier frame (2) and are arranged approximately vertically in relation to the direction of travel by means of a control device which can be operated by a sensor,
**characterised in that,**
the tillage tool (3) is held onto the carrier frame (2) by means of a swivel arm (41) which is attached to the carrier frame (2) in its central section (41') and which carries the tillage tool (3) at one end section (41''), preferably the one facing the vehicle (4), whilst its other end section (41''') is fixed to one or more springs (46) braced against the carrier frame (2).

2. The agricultural machine in accordance with Claim 1,
**characterised in that,**
The tillage tool (3) is attached to the swivel arm (41), for example by means of a housing (42) or similar, on the side facing the carrier frame (2) between its axis of rotation and the outside edge, preferably in the outer section of the edge, or alternatively in the front section of the housing (42) as seen in the direction of travel.

3. The agricultural machine in accordance with Claim 1 or 2,
**characterised in that,**
the carrier frame (2) can be swivelled about an axis (B) running parallel to the vehicle's longitudinal axis (A) and is preferably held in position by means of a lifting ram (18).

4. The agricultural machine in accordance with one or more of Claims 1 to 3,
**characterised in that,**
the carrier frame (2) consists of a T-shaped spar (11) and a carrier arm (15) which is attached to the bar (12) of the spar (11) running parallel to the longitudinal axis (A) of the vehicle (4), and the carrier arm (15) can be moved within a profile section (16) which is connected to the vehicle (4) using an articulated joint.

5. The agricultural machine in accordance with Claim 4,
**characterised in that,**
the carrier frame (2) is equipped with an outrigger wheel (39) attached to the legs (13, 14) of the T-shaped spar (11) with the outrigger wheel (39) being able to move from side to side, for example by means of a rail (37).

## Revendications

1. Machine agricole (1) comprenant un ou plusieurs outils de labourage du sol entraînés (3), qui, moyennant un cadre support déplaçable (2), se laissent monter à l'avant ou l'arrière du véhicule (4) et qui, disposés à peu près perpendiculairement au sens de déplacement du véhicule, sont réglables au moyen d'un équipement de commande actionné par un palpeur.
**caractérisée en ce que**
l'outil de labourage du sol (3) est retenu sur le cadre support (2) au moyen d'un bras pivotant (41) dont la partie centrale (41') est montée pivotante sur le cadre support (2), qui, sur une extrémité (41''), de préférence l'extrémité (41'') orientée vers le véhicule (4), porte l'outil de labourage du sol (3) et sur l'autre extrémité duquel (41''') sont montés pivotants un ou plusieurs ressorts (46) appuiés sur le cadre support (2).

2. Machine agricole d'après la revendication 1,
**caractérisée en ce que**,
sur la face donnant sur le cadre support (2), entre son axe de rotation et le bord extérieur, de préférence vers l'extrémité extérieure, ou en direction de marche sur l'extrémité avant du carter (42), l'outil de labourage du sol (3) est fixé, par exemple au moyen d'un carter (42) ou d'une manière semblable, au bras pivotant (41).

3. Machine agricole d'après la revendication 1 ou 2,
**caractérisée en ce que**
le cadre support (2) est retenu pivotant, de préférence au moyen d'un vérin (18), autour d'un axe (B) orienté en direction de l'axe longitudinal (A) du véhicule (4),

4. Machine agricole d'après une ou plusieurs des revendications 1 à 3,
**caractérisée en ce que**
le cadre support (2) consiste d'un profil (11) conçu sous la forme d'un T et d'un bras support (15) fixé sur la traverse (12) dirigée parallèlement à l'axe longitudinal (A) du véhicule (4), le bras support étant guidé de manière déplaçable dans un corps profilé (16) lié par articulation sur le véhicule (4).

5. Machine agricole d'après la revendication 4,
**caractérisée en ce que**
le bras support (2) est muni d'une roue d'appui (39) fixée de manière réglable, par exemple au moyen d'une glissière (37) de préférence latéralement aux bras (13, 14) du profil en T (11).
